# EUROPEAN PATENT SPECIFICATION

(11) **EP 4 209 437 B1**
(45) Date of publication and mention of the grant of the patent: **20.08.2025**
(21) Application number: 21940011.6
(22) Date of filing: 29.11.2021
(51) Int. Cl.: G06Q 10/083, G06Q 10/08, B65G 61/00, B64U 101/64

(54) **LOGISTICS MANAGEMENT SYSTEM, LOGISTICS MANAGEMENT METHOD, AND PROGRAM**
LOGISTIKVERWALTUNGSSYSTEM, LOGISTIKVERWALTUNGSVERFAHREN UND PROGRAMM
SYSTÈME DE GESTION LOGISTIQUE, PROCÉDÉ DE GESTION LOGISTIQUE, ET PROGRAMME

(43) Date of publication of application: 12.07.2023
(73) Proprietor: Rakuten Group, Inc., Setagaya-ku Tokyo 158-0094 (JP)
(72) Inventor: TAZUME, Toshiaki, Tokyo 158-0094 (JP); TAKIZAWA, Jun, Nagano 391-0301 (JP)
(74) Representative: EIP
(86) International application number: PCT/JP2021/043667
(87) International publication number: WO 2023/095346

(56) References cited:
- WO-A1-2019/023522
- WO-A1-2020/071060
- CN-A- 113 034 072
- JP-A- 2019 074 926
- JP-A- 2020 057 056
- JP-A- 2021 149 381
- JP-A- H0 612 578
- US-A1- 2019 205 819

## Description

### TECHNICAL FIELD

The present disclosure relates to a logistics management system, a logistics management method, and a program.

### BACKGROUND

Logistics systems used to deliver, using an unmanned vehicle (e.g., unmanned ground vehicle or unmanned aerial vehicle), an item to a person who picks up the item have been in practical use. Patent Literature 1 discloses that a user enters a pickup code into an input-output unit of an unmanned vehicle when picking up a package from the unmanned vehicle. The unmanned vehicle performs user authentication. Patent Literature 2 relates to an autonomous vehicle. Patent Literature 3 relates to a transport system including an autonomous mobile unit and a management device.

### CITATION LIST

### Patent Literature

Patent Literature 1: Japanese Patent No. 6880334
Patent Literature 2: WO 2019/023522 A1
Patent Literature 3: US 2019/205819 A1

### SUMMARY OF INVENTION

### Technical Problem

In order to support the input operation for the input-output unit and the package pickup, the unmanned vehicle may output an operation guidance using a voice or an image. While the operation guidance is unchanged in any circumstance, a variety of users pick up packages. Thus, flexibility is required for the unmanned vehicle.

### Solution to Problem

An aspect provides the logistics management system according to claim 1.

Another aspect provides the logistics management method according to claim 10.

A further aspect provides the program according to claim 11. Advantageous Effects of Invention

The present disclosure allows for outputting of an operation guidance corresponding to a user.

### BRIEF DESCRIPTION OF DRAWINGS

Fig. 1 is a diagram schematically showing the configuration of a logistics management system according to an embodiment.
Fig. 2 is a diagram showing the data configuration of user information, delivery information, and group information according to the embodiment.
Fig. 3 is a block diagram showing the functions of the server according to the embodiment.
Fig. 4 is a diagram illustrating the steps for the user to pick up a package according to the embodiment.
Fig. 5 is a flowchart illustrating a procedure for code notification according to the embodiment.
Fig. 6 is a flowchart illustrating a procedure for user authentication according to the embodiment.
Fig. 7 is a flowchart illustrating a procedure for specifying the output mode of the operation guidance according to the embodiment.

### DESCRIPTION OF EMBODIMENTS

A logistics management system, a logistics management method, and a program according to an embodiment will now be described. In this embodiment, the unmanned vehicle used by the logistics management system is an unmanned ground vehicle (UGV) that travels on a road.

### Logistics System

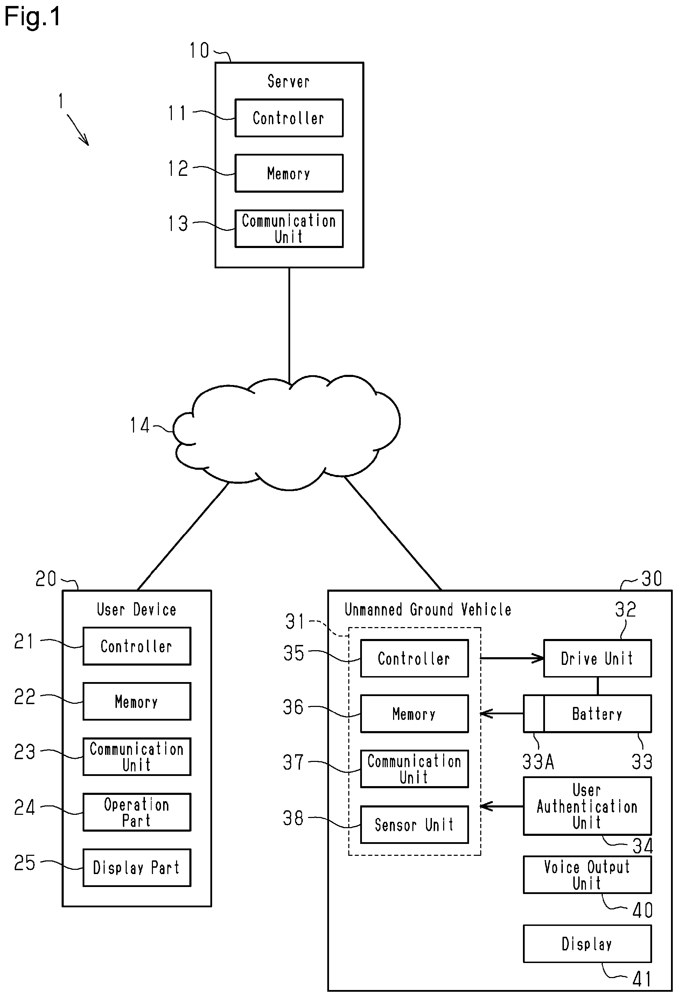

As shown in Fig. 1, a logistics management system 1 includes a server 10, a user device 20, and an unmanned ground vehicle 30. The logistics management system 1 is used to deliver an item to the delivery address of a user who picks up a package.

### Server

The server 10 is managed by a logistics manager and includes one or more information processing devices. The server 10 includes a controller 11, a memory 12, and a communication unit 13. The controller 11 includes an arithmetic logic unit and a memory (memory medium). The arithmetic logic unit loads, for example, an operating system and various programs (e.g., logistics management program) into the memory of the controller 11 from the memory 12 or a storage, and executes instructions retrieved from the memory of the controller 11. The arithmetic logic unit may have the following configuration.
(1) Circuitry including one or more processors that run according to a computer program;
(2) Circuitry including one or more dedicated hardware circuits that execute at least part of various processes; or
(3) Circuitry including a combination thereof.

The arithmetic logic unit includes a CPU and a memory (e.g., RAM and ROM). The memory stores program codes or commands configured to cause the CPU to execute processes. The memory, or computer-readable medium, includes any type of medium that is accessible by general-purpose computers or dedicated computers. Alternatively, instead of or in addition to the CPU, the arithmetic logic unit may include a dedicated hardware circuit (for example, application specific integrated circuit (ASIC)) that executes hardware processing for at least part of the processes executed by the arithmetic logic unit.

The memory 12 is an auxiliary storage device (memory medium) and includes various types of information used to manage logistics. The communication unit 13 is implemented as hardware, software, or a combination thereof. The communication unit 13 sends and receives data to and from the user device 20 and the unmanned ground vehicle 30 via a network 14. The server 10 may include an operation part or a display part for which a logistics manager or the like performs an input operation.

### User Device

The user device 20 is an information processing device used by a user who uses the logistics management system 1. The user device 20 is a multi-functional telephone terminal (e.g., smartphone), a tablet terminal, a personal computer, a wearable computer, or another information processing device.

The user device 20 includes a controller 21, a memory 22, a communication unit 23, an operation part 24, and a display part 25. The controller 21 includes an arithmetic logic unit and a memory (memory medium). The arithmetic logic unit and memory have the same hardware configuration as the server 10. The arithmetic logic unit loads, for example, an operating system and various programs (e.g., a program that executes delivery-related processes) into the memory of the controller 21 from the memory 22 or a storage, and executes instructions retrieved from the memory of the controller 21.

The memory 12 has the same hardware configuration as the server 10. The memory 12 may store a program that executes delivery-related processes. The program may be an application program used only for receiving the offer of delivery services or may be a program that receives the offer of delivery services using a social networking service. Alternatively, the program may be an application program capable of receiving delivery-related notification emails. As another option, the memory 12 may store a web browser program that receives the offer of delivery services. The communication unit 23 is implemented as hardware, software, or a combination thereof. The communication unit 23 sends and receives data to and from the server 10 via the network 14. The operation part 24 is a touch panel integrated with the display part 25 (e.g., display). Alternatively, the operation part 24 is, for example, an operation button, a keyboard, a mouse, or a controller on a case or the like of the user device 20. The display part 25 outputs various types of images according to an output instruction of the controller 21.

### Unmanned Ground Vehicle

The unmanned ground vehicle 30 is a movable device without a person onboard. The unmanned ground vehicle 30 is managed by a logistics manager or another owner. The unmanned ground vehicle 30 includes a control device 31, a drive unit 32, a battery 33 (energy source), a user authentication unit 34, a voice output unit 40, and a display 41. The control device 31 controls the drive unit 32. The drive unit 32 includes, for example, a drive source that is driven by electric power supplied from the battery 33 or a power transmission mechanism that is operated by the power obtained from the drive source. The power transmission mechanism transmits the power of the drive source to wheels. In the present embodiment, the drive source is an electric motor. The drive source may be an engine that is driven by consuming fuel. In this case, instead of the battery 33, a fuel supplying unit that supplies the drive unit 32 with fuel is disposed as the energy source. The unmanned ground vehicle 30 may include the drive unit 32 of a hybrid type equipped with various types of drive sources.

The user authentication unit 34 is an input device that authenticates a user who picks up a package. The user authentication unit 34 is an input device that includes a button used to enter an authentication code such as a personal identification number (PIN), a touch panel, a scanner that recognizes a barcode or a two-dimensional code presented, or the like.

The voice output unit 40 outputs a voice for operation guidance or the like. Voice information is stored in the control device 31. The voice output unit 40 executes voice processing using the voice information that has been output from the control device 31. For example, the voice of the operation guidance explains to the user how to take a package out of a box mounted in the unmanned ground vehicle 30 and enable the unmanned ground vehicle 30 to depart to the next destination. Further, the voice of the operation guidance is output at multiple points in time. Examples of the voice of the operation guidance include "Box 1 will open," "Boxes 3 and 4 will open," "Please be careful with dry ice contained in the box," "Please do not forget to take your receipt," "Please close the door after you pick up the package," and "I will begin moving."

The voice output unit 40 is implemented as a combination of hardware and software. The voice output unit 40 outputs a voice with a volume designated by the control device 31. The voice output unit 40 outputs a voice at a speed designated by the control device 31. The voice output unit 40 may execute a process for expressing a function that keeps a pitch of the voice unchanged even if the speed changes.

The display 41 shows various types of screens. The operation guidance shown on a screen is an image explaining to the user how to operate the unmanned ground vehicle 30 to pick up a package from the unmanned ground vehicle 30. Image information is stored in the control device 31.

The control device 31 includes a controller 35, a memory 36, a communication unit 37, and a sensor unit 38. The controller 35 has a similar configuration to the controller 11 of the server 10 or the controller 21 of the user device 20. The memory 36 has a similar configuration to the memory 12 of the server 10 or the memory 22 of the user device 20. In addition to an autonomous traveling program, the memory 36 may store various types of information (e.g., map information) that is necessary for autonomous traveling.

The memory 36 also stores the voice information of the operation guidance. Multiple sets of voice information are stored in accordance with the language used by the user. For example, the memory 36 stores the voice information in Japanese and the voice information in English.

The communication unit 37 is implemented as hardware, software, or a combination thereof. The communication unit 37 sends and receives data to and from the user device 20 and the server 10 via the network 14. The sensor unit 38 includes a global positioning system (GPS) sensor that detects a current location. The sensor unit 38 may include at least one of an image sensor (camera), a sensor that detects wind direction and wind speed, an acceleration sensor, a gyro sensor, an infrared sensor, a geomagnetic sensor, an altitude sensor, a displacement sensor, and a temperature sensor.

The unmanned ground vehicle 30 may be connected to a manager terminal used by a delivery manager via the network 14. Using the manager terminal, the delivery manager may visually check an image captured by the unmanned ground vehicle 30 to monitor the state of the unmanned ground vehicle 30.

The controller 35 obtains the remaining capacity of the battery 33 from a remaining capacity detection circuit 33A in the battery 33. The remaining capacity detection circuit 33A of the battery 33 detects the remaining capacity of the battery 33 and outputs it to the controller 35. The controller 35 obtains remaining capacity information from the remaining capacity detection circuit 33A and send it to the server 10 via the communication unit 37. The server 10 manages the state of charge of the unmanned ground vehicle 30.

### Data Configuration

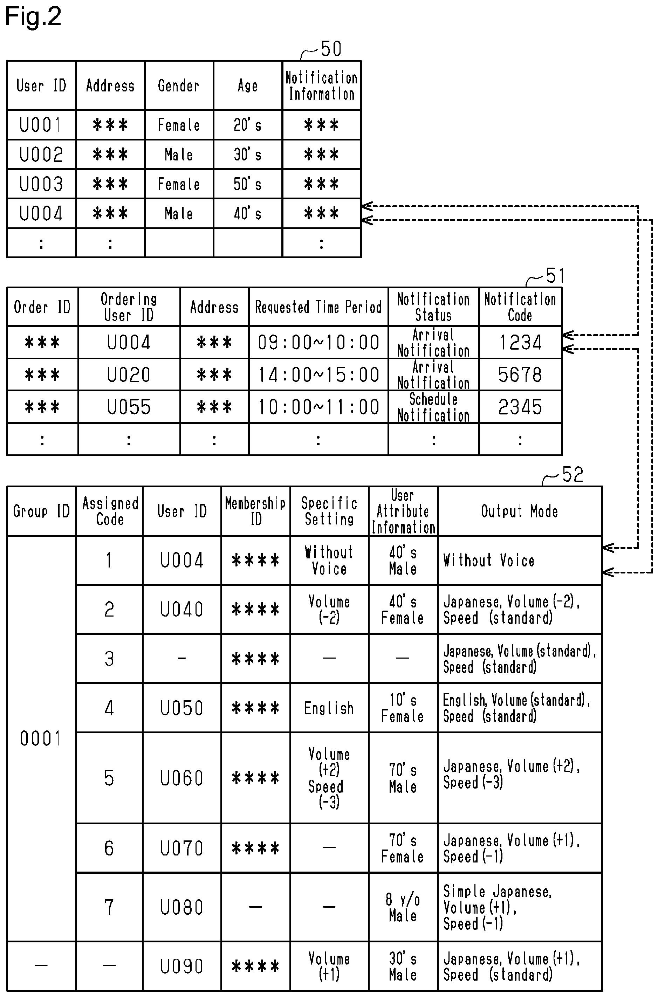

The data stored in the memory 12 of the server 10 will now be described with reference to Fig. 2. The memory 12 of the server 10 stores membership information 50, delivery request information 51, and guidance output information 52. The server 10 includes a database management system that is software for managing the set of information. The configuration of the database is not particularly limited, and may be a relational type, a hierarchical type, a network type, or the like.

The membership information 50 includes information corresponding to a user who is a member. The user uses an online shopping mall or an electronic commerce (EC) site. Alternatively, the user directly or indirectly uses the logistics management system 1. The membership information 50 is generated when, for example, the user completes an initial registration. The membership information 50 includes a user ID, address, age, group, and notification information. The user ID is identification information allocated to each user. The address indicates the location of a delivery point where the user picks up a package. The notification information indicates where a notification for a user is sent. For example, when the user receives a push notification via an application program implemented in the user device 20, the notification information includes a registered ID, a device token, and the like associated with the user device 20. Alternatively, when the user receives a notification via email, the notification information includes the user's email address.

The delivery request information 51 is related to a request for delivery of a package. The delivery request information 51 is generated, for example, for each package that is subject to delivery. The delivery request information 51 includes an order ID, ordering user ID, address, requested time period, notification status, and notification code. The order ID is information allocated to a package subject to delivery. The ordering user ID indicates a user who ordered the package to be delivered, and is associated with the user ID of the membership information 50. The address indicates the address of a user who made an order. The address may be information indicating a location at which the user picks up a package. Thus, the address does not have to match the address of the membership information 50. The requested time period is a time period in which the user wishes to pick up a package.

The notification status indicates the status of a notification related to delivery. The server 10 sends a notification to the user device 20 at least one of the following points in time: for example, when the server 10 accepts a delivery request; when the unmanned ground vehicle 30 leaves a station (e.g., warehouse); before a predetermined time at which the unmanned ground vehicle 30 reaches a delivery point; and when the unmanned ground vehicle 30 reaches the delivery point. The notification status stores the type of the latest one of notifications sent from the server 10 to the user. The delivery request information 51 may include a delivery status. The delivery status indicates a delivery status of a package. For example, the delivery status is one of statuses such as "undelivered," "in transit," and "delivered."

The notification code is a code which the user enters into the user authentication unit 34 of the unmanned ground vehicle 30 when picking up a package by operating the unmanned ground vehicle 30.

The guidance output information 52 is information in which a user's mode of operating the unmanned ground vehicle 30 is associated with the user. The guidance output information 52 includes a group ID, assigned code, user ID, specific setting, member attribute information, and output mode.

The group ID is identification information of a group to which multiple users belong. The same address is associated with the users who belong to the group. The users register the group using the user device 20. The user device 20 sends, to the server 10, identification information of the users who belong to the group and a group registration request. When receiving the group registration request from the user device 20, the server 10 issues a group ID. Further, the server 10 associates the user ID with the group ID and stores the user ID in the guidance output information 52. The group ID is not registered for a user who does not belong to the group, such as a user with the user ID "U0090" in the guidance output information 52 shown in Fig. 2.

The assigned code is identification information assigned to a user belonging to a group. For example, seven users belonging to the group ID "0001" are associated with assigned codes "1" to "7." Each user belonging to the group enters, into the unmanned ground vehicle 30 as an authentication code, a notification code notified of the user or a code obtained by assigning an assigned code to the notification code.

The user ID is associated with the user ID of the membership information 50 and the delivery request information 51. The user ID of at least one of the users belonging to a group only needs to be registered in the guidance output information 52. The other users are identifiable from their assigned codes. Thus, their user IDs may be omitted.

The specific setting is information registered by a user. The specific setting indicates the output mode of an operation guidance of the unmanned ground vehicle 30. When the user requests that the operation guidance be output without a voice, "without voice" is registered in the specific setting. In the present embodiment, the output mode of the operation guidance can be set by setting the language, volume, and speed. The language refers to languages such as Japanese and English. The volume refers to a volume at which the voice of the operation guidance is output from the voice output unit 40 of the unmanned ground vehicle 30. The volume can be set to 0, which is a standard volume. In addition, the volume can be set to a smaller volume (e.g., -3) than the standard volume and a larger volume (e.g., +3) than the standard volume. The speed refers to the speed of the voice of the operation guidance. The speed can be set to 0, which is a standard speed. In addition, the speed can be set to a lower speed (e.g., -3) than the standard speed and a higher speed (e.g., +3) than the standard speed. When the user requests a volume smaller than the standard volume, the user uses the user device 20 to send, to the server 10, information used to register a specific setting such as "volume (-2)." The server 10 registers, in the guidance output information 52, the designated volume as the specific setting. When the user requests a speed lower than the standard speed, the user uses the user device 20 to send, to the server 10, information used to register a specific setting such as "speed (-2)." The server 10 registers, in the guidance output information 52, the designated speed as the specific setting.

The user attribute information indicates the gender, age, and the like of the user. The user attribute information may be information in which information such as gender and age of the membership information 50 is registered, or may be information that is newly registered when, for example, the user registers a group.

The output mode is information indicating the output mode of an operation guidance, and is associated with each user. The output mode is based on a specific setting or based on the attribute of a user included in the membership information 50. The output mode is set by setting whether to output the voice of the operation guidance. When the voice of the operation guidance is output, the output mode is set by setting the language, volume, and speed.

### Outline of Operation Guidance

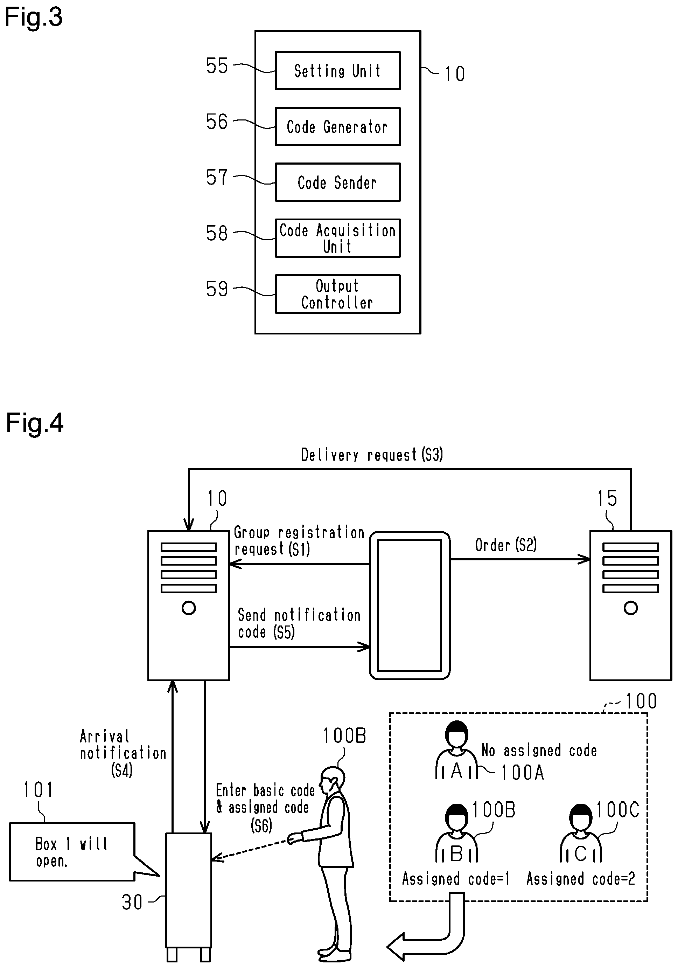

The outputting of an operation guidance of the unmanned ground vehicle 30 using a voice will now be described with reference to Figs. 3 and 4. The logistics management system 1 functions as a setting unit 55, a code generator 56, a code sender 57, a code acquisition unit 58, and an output controller 59. In the present embodiment, these functions are enabled by the server 10 executing a program for determining the output mode of the operation guidance.

Based on the user setting information associated with each user, the setting unit 55 sets the output mode of an operation guidance that is output by the unmanned ground vehicle 30, which carries a package. In the present embodiment, the user setting information corresponds to the specific setting or user attribute information.

The code generator 56 generates a notification code for a package subject to carrying and associates the generated notification code with a user who picks up or deposits the package. Specifically, the code generator 56 generates a notification code that is used by the user to pick up a package from the unmanned ground vehicle 30. The notification code may be a PIN, a two-dimensional code, or a three-dimensional code. For example, when a user having the user ID "U004" orders an item in an online shopping mall or the like, the code generator 56 associates the user ID "U0004" with the generated notification code and stores them in the delivery request information 51. This notification code is associated with "without voice", which is the output mode of the guidance output information 52, via the user ID "U004." When the user belongs to a group, the notification code of the user is associated with the other users belonging to the group including the user having the user ID "U004" via the user ID "U004."

The outline of a procedure in which a user belonging to a group picks up a package from the unmanned ground vehicle 30 will now be described with reference to Fig. 4. The description focuses on a case where the server 10 executes a process for authenticating a user.

First, the user uses the user device 20 to register a group in the server 10. This user is referred to as a registered user. Based on an operation performed by the registered user, the user device 20 shows a screen for registering a group on the display part 25. The registered user enters, into this screen, information necessary for registration of the group. The user device 20 sends information related to the group together with a group registration request (step S1). When receiving the group-related information and the group registration request, the server 10 generates a group ID and registers the group-related information in association with the group ID.

The registered user can add a user to the group when registering the group in the server 10 or at a point in time after registering the group. Users belonging to a group are, for example, users such associated with the same address (e.g., family members). Users belonging to a group can pick up a package delivered to the address associated with the group.

More specifically, a delivery person directly delivers a package to a user present at a designated address when delivering the package, whereas the user needs to perform user authentication for the unmanned ground vehicle 30 when picking up the package from the unmanned ground vehicle 30. Further, in order to perform user authentication, the information related to the user who performs user authentication needs to be registered in advance. However, if multiple users each pick up a package that has been delivered to a predetermined address, it takes time for the registered user to register, in the server 10, detailed information such as the addresses and names of all the users. To solve this problem, a configuration is employed in which the information related to multiple users associated with the same address can be easily registered by the registered user registering a user to a group. Here, multiple users may possibly perform user authentication using the same authentication code. However, in this case, an operation guidance or the like corresponding to each user cannot be provided. As a result, the delivery services to be provided are uniform. To solve this problem, a configuration is employed in which multiple users associated with the same address can be registered as group members and a specific setting designating the output mode of the operation guidance can be made. The authority of the registered user may be assigned to one user or a predetermined number of users in a group. Alternatively, all the users belonging to a group may be able to add a user to the group or set a specific setting.

Next, the user orders an item using the user device 20. This user is referred to as an ordering user 100A. The registered user may be the same as or different from the ordering user 100A. The user device 20 used by the ordering user 100A sends order information to an order receiving server 15 (step S2). The order information includes a user ID, an address, a requested time period, which indicates a requested delivery time of an item, and the like. The order receiving server 15 receives order information and performs, for example, settlement of an item or the like. Further, the order receiving server 15 sends, to the server 10, a delivery request together with the detailed information of the delivery request (step S3). The server 10 stores, in the memory 12, the detailed information of the delivery request as the delivery request information 51. While the order receiving server 15 is separate from the server 10 in this embodiment, the order receiving server 15 and the server 10 may be one system or device that includes these server functions.

The unmanned ground vehicle 30 carries a package in accordance with a delivery plan generated by the server 10. When arriving at a predetermined pickup location, the unmanned ground vehicle 30 sends an arrival notification to the server 10 (step S4). The unmanned ground vehicle 30 may send the arrival notification earlier by a predetermined time than a scheduled time at which the unmanned ground vehicle 30 will arrive at the pickup location.

The server 10 generates a package delivery plan based on the requested time period and address. Further, the server 10 generates a notification code and sends the generated notification code to the user device 20 used by the ordering user 100A at a predetermined point in time (step S5). In this embodiment, the notification code is a four-digit PIN. The notification code may be sent not only to the user device 20 used by the ordering user 100A, but also to the user device 20 used by another user who belongs to the same group. Alternatively, the notification code may be sent to the user device 20 shared by users belonging to the group.

The ordering user 100A confirms the notification code using the user device 20. The ordering user 100A picks up a package from the unmanned ground vehicle 30 by entering the notification code into the unmanned ground vehicle 30. Similarly, the other users 100B and 100C belonging to the same group 100 as the ordering user 100A each pick up a package from the unmanned ground vehicle 30 by entering the notification code and the assigned code into the unmanned ground vehicle 30.

When the ordering user 100A picks up a package, the ordering user 100A enters a PIN (notification code) into the user authentication unit 34 of the unmanned ground vehicle 30 without adding an assigned code. The unmanned ground vehicle 30 sends, to the server 10, the entered notification code as the authentication code. The server 10 specifies the ordering user 100A associated with the authentication code. Further, the server 10 refers to the guidance output information 52 to specify the output mode associated with the ordering user 100A. Furthermore, the server 10 sends the specified output mode to the unmanned ground vehicle 30. Using the received output mode, the unmanned ground vehicle 30 outputs a voice 101 of the operation guidance. This allows the ordering user 100A to hear the voice 101 using an output mode that is based on the specific setting designated by him or her or an output mode determined based on the attribute (e.g., age) of the ordering user 100A. In a case where the server 10 does not store the information of the specific setting or the user attribute in association with the ordering user 100A, the output mode of an initial setting may be applied.

A case where the user 100B, who is different from the ordering user 100A, picks up a package will now be described. The different user 100B gets to know the notification code by receiving a contact from the ordering user 100A. Alternatively, when the server 10 sends the notification code to the user device 20 of the different user 100B or the shared user device 20, the different user 100B gets to know the notification code using that user device 20. The user 100B recognizes the assigned code assigned to him or her. Alternatively, the user 100B uses the user device 20 to obtain the information of the assigned code. To pick up the package, the different user 100B enters the PIN (notification code) and the assigned code into the user authentication unit 34 of the unmanned ground vehicle 30 (step S6). That is, when the notification code is "1234" and the assigned code of the user 100B is "5," the user 100B enters "12345" into the unmanned ground vehicle 30 as the authentication code.

The unmanned ground vehicle 30 sends, to the server 10, the entered notification code and assigned code as the authentication code. The server 10 specifies the ordering user 100A associated with the notification code included in the authentication code. Further, the server 10 refers to the guidance output information 52 to specify users associated with the ordering user 100A via the group ID. Then, the server 10 specifies the user 100B associated with the assigned code included in the authentication code from the specified users, and further specifies the output mode associated with the user 100B. The server 10 sends the specified output mode to the unmanned ground vehicle 30. Using the received output mode, the unmanned ground vehicle 30 outputs the voice 101 of the operation guidance. This allows the user 100B to hear the voice 101 using an output mode designated by him or her or an output mode determined based on the attribute (e.g., age) of the user 100B. In a case where the server 10 does not store the information of the specific setting or the user attribute in association with the user 100B, the output mode associated with the ordering user 100A may be employed. Process of Determining Output Mode of Operation Guidance

The process of determining the output mode of the operation guidance will now be described. In the present embodiment, the process is executed by the server 10.

First, the server 10 sets the output mode of the operation guidance in association with each user. In this case, the user pre-registered a group in the server 10. The user enters information used to designate the output mode of the operation guidance for, among users that belong to the group pre-registered in the server 10, that user or other users associated with the same address as the user. In accordance with the user's operation, the user device 20 associates, with each user, a specific setting that designates the output mode of the operation guidance and sends the associated specific setting to the server 10. At this time, the user device 20 sends, to the server 10, the group ID or user ID of one user belonging to the group together with the specific setting. When a user registers a group, the user may register the other users belonging to the group and also register specific settings of the other users.

The setting unit 55 receives, from the user device 20, the information indicating the specific setting that designates the output mode of the operation guidance and the user associated with the specific setting. The setting unit 55 registers the specific setting in the user information associated with the specific setting and sets the output mode. The specific setting from the user device 20 is associated with a user belonging to the registered group. That is, the user can set the output mode of the operation guidance to a mode requested by the user. Alternatively, the user can set an output mode suitable for a different user belonging to the same group in accordance with the different user. For example, the output mode associated with a child or an elderly person can be set to a low speed.

For a user having no specific setting, the server 10 determines the output mode based on the user attribute (e.g., gender or age) of the membership information 50 at a predetermined point in time. The predetermined point in time is, for example, when a user who has no specific setting performs user authentication, or when the unmanned ground vehicle 30 departs from a station which is a departure point.

### Sending of Notification Code

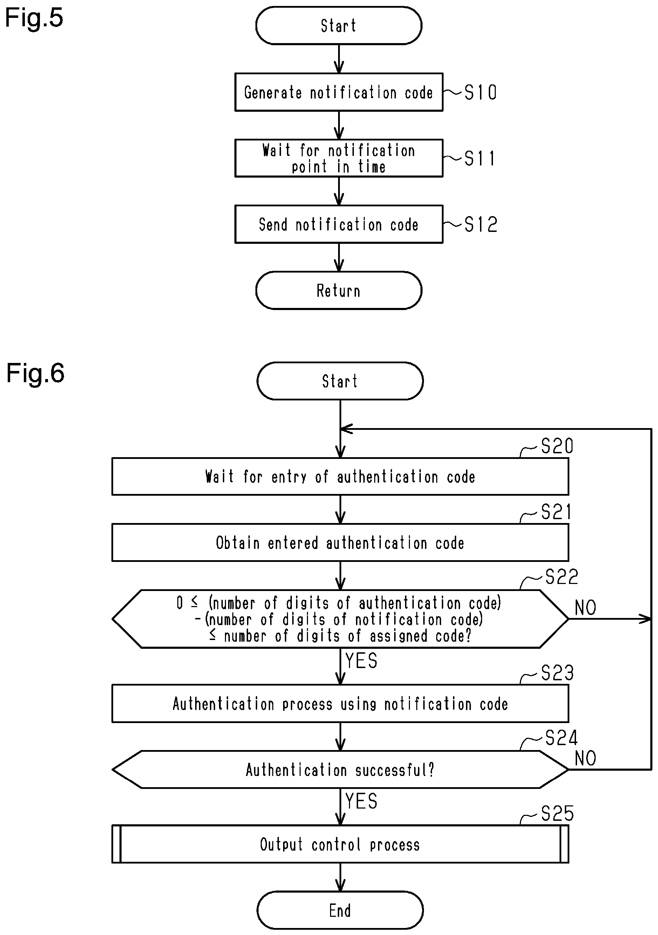

Fig. 5 illustrates the steps of a process for sending a notification code. The code generator 56 of the server 10 generates a notification code (step S10). When multiple packages are delivered to the same user, the code generator 56 may generate one notification code or may generate the same number of notification codes as the packages. For example, the code generator 56 generates "1234" as the notification code.

The code sender 57 waits for the sending of the notification code (step S11). The point in time when the notification code is sent may be within a period from when the ordering user orders an item to when the unmanned ground vehicle 30 arrives at the pickup location. For example, the code generator 56 may generate the notification code when receiving the arrival notification at the pickup location from the unmanned ground vehicle 30.

When determining that the point in time of sending the notification code has been reached, the code sender 57 sends the notification code to the user device 20 of the ordering user (step S12). In this step, the server 10 obtains, from the membership information 50, the notification information of the membership information 50 corresponding to the ordering user and sends the notification code to the notification information.

### User Authentication

Fig. 6 illustrates the steps of a user authentication process. After the code sender 57 of the server 10 sends the notification code, the code acquisition unit 58 waits for the entry of the authentication code to the unmanned ground vehicle 30 (step S20).

When arriving at the pickup location, the ordering user or another user belonging to the same group as the ordering user enters the authentication code into the unmanned ground vehicle 30. For example, the ordering user enters the notification code "1234" into the unmanned ground vehicle 30. Another user belonging to the same group as the ordering user enters, into the unmanned ground vehicle 30, an authentication code obtained by adding an assigned code to the notification code. The authentication code to be entered is, for example, "12345." The unmanned ground vehicle 30 sends, to the server 10, the authentication code entered by the user. The server 10 obtains the authentication code from the unmanned ground vehicle 30 (step S21).

The code acquisition unit 58 determines whether the difference in the number of digits obtained by subtracting the number of digits of the notification code from the number of digits of the authentication code is greater than or equal to 0 and is less than or equal to the number of digits of the assigned code (step S22). For example, in a case where the notification code has four digits and the assigned code has one digit, the entry is correct if the authentication code has four or five digits. When the authentication code entered by the user into the unmanned ground vehicle 30 has three or less digits or has six or more digits, the code acquisition unit 58 determines that the condition that the difference in the number of digits is greater than or equal to 0 and less than or equal to the number of digits of the assigned code is not satisfied (step S22: NO), the process returns to the step S20. That is, the code acquisition unit 58 determines that the authentication code is incorrect and waits for the re-entry of the authentication code. When the user enters an incorrect authentication code a predetermined number of times, a new notification code may be set and the set notification code may be sent to the user device 20.

When determining that the difference in the number of digits is greater than or equal to 0 and is less than or equal to the number of digits of the assigned code (step S22: YES), the code acquisition unit 58 executes the authentication process using the notification code (step S23). Specifically, when obtaining a four-digit authentication code, the code acquisition unit 58 performs user authentication using that authentication code. When obtaining a five-digit authentication code, the code acquisition unit 58 performs user authentication using the four digits counted from the first digit of that authentication code.

When determining whether the authentication is successful and it is determined that the authentication is successful (step S24: YES), the code acquisition unit 58 executes an output control process (step S25). When determining whether the authentication is successful and it is determined that the authentication is not successful (step S24: NO), the code acquisition unit 58 returns to step S20 and waits for the entry of the authentication code.

### Output Control Process

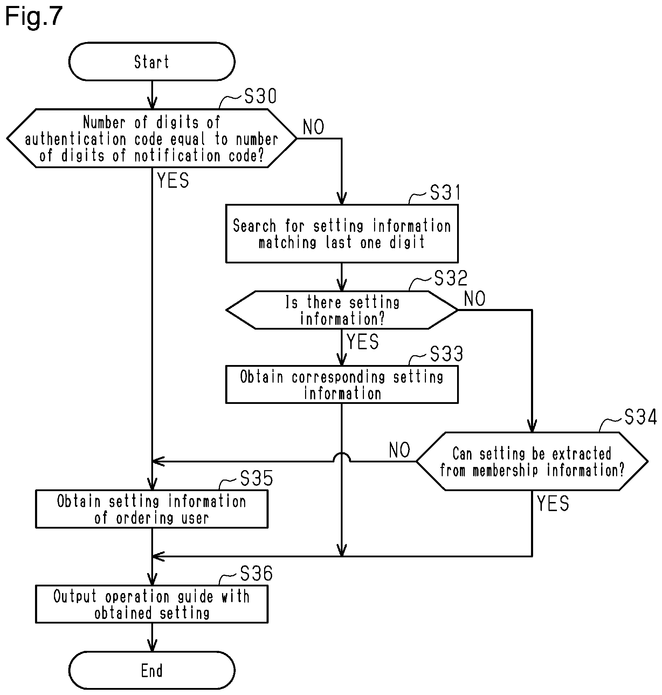

Fig. 7 illustrates the steps of the output control process. The output control process determines the output mode of an operation guidance and causes the unmanned ground vehicle 30 to output the operation guidance using the determined output mode.

The output controller 59 of the server 10 determines whether the number of digits of the authentication code is equal to the number of digits of the notification code (step S30). When determining that the number of digits of the authentication code is equal to the number of digits of the notification code (step S30: YES), the output controller 59 obtains setting information of the ordering user (step S35). Specifically, the output controller 59 obtains, as the setting information, the output mode stored in the membership information 50 of the ordering user from the guidance output information 52.

Then, the output controller 59 uses the obtained output mode to cause the unmanned ground vehicle 30 to output the operation guidance (step S36). Specifically, the output controller 59 designates the obtained output mode and sends, to the unmanned ground vehicle 30, an output request for the operation guidance. The unmanned ground vehicle 30 receives the output request and the output mode of the operation guidance from the server 10. Then, the voice output unit 40 reads the voice information of the operation guidance from the memory 36 and outputs the voice information using the received output mode. Alternatively, the voice output unit 40 reads voice information corresponding to the received output mode from the memory 36, and outputs the read voice information.

When determining that the number of digits of the authentication code is not equal to the number of digits of the notification code (step S30: NO), the output controller 59 refers to the guidance output information 52 to search for the setting information that matches the last one digit of the authentication code (step S31) and determine whether the corresponding setting information is present (step S32). Specifically, the output controller 59 specifies the guidance output information 52 of a user belonging to the same group as the ordering user. Then, the output controller 59 searches the specified guidance output information 52 for the guidance output information 52 including the last one digit of the authentication code as the assigned code. For example, when the last one digit of the authentication code is "5," the output controller 59 searches for the guidance output information 52 having the assigned code "5." When the assigned codes "1" to "6" are respectively allocated to six users belonging to the same group as the ordering user, the output controller 59 detects the guidance output information 52 including the assigned code "5."

When determining that the setting information that matches the last one digit of the authentication code is present (step S32: YES), the output controller 59 obtains the corresponding setting information (step S33). For example, the output controller 59 obtains the guidance output information 52 including the assigned code "5." Based on the output mode included in the guidance output information 52, the output controller 59 causes the unmanned ground vehicle 30 to output the operation guidance.

When no output mode is stored in the guidance output information 52 including the assigned code "5," the output controller 59 determines that the setting information that corresponds to the last one digit is not present (step S32: NO). Then, the output controller 59 determines whether the setting can be extracted from the membership information 50 (step S34). Specifically, the output controller 59 searches for the membership information 50 associated with the user specified based on the assigned code. When detecting the corresponding membership information 50, the output controller 59 determines whether the membership information 50 includes user attribute information (e.g., age or language).

When the membership information 50 includes the user attribute information (e.g., age or language), the output controller 59 determines that the setting can be extracted from the user information (step S34: YES). Then, the output controller 59 sets the output mode of the user to a standard output mode that has been set in accordance with the membership information 50 (step S36). For example, the output mode of a user with a relatively old age is set by setting the speed of the operation guidance to be lower than a standard speed and setting the volume of the operation guidance to be greater than a standard volume. The output mode of a user with a relatively young age (e.g., ten years old) is set by setting the speed of the operation guidance to be lower than the standard speed. When the user's language is English, the output mode outputs an operation guidance that speaks in English. When specifying the output mode based on the membership information 50, the output controller 59 stores the output mode in the guidance output information 52. When the user registers a specific setting, the output mode determined based on the membership information 50 is updated with the output mode based on the specific setting.

When the membership information 50 includes no user attribute information (e.g., age or language), the output controller 59 determines that the setting cannot be extracted from the user information (step S34: NO). In this case, the output controller 59 obtains the setting information of the ordering user (step S35) and uses the obtained setting to cause the unmanned ground vehicle 30 to output the operation guidance (step S36). In this step, the operation guidance is output based on the setting information of the ordering user. Instead, the operation guidance may be output in the state of an initial setting. In the initial setting, the language is set to the official language of an area where the unmanned ground vehicle 30 carries a package, and the volume and speed are set to standard levels.

The advantages of the embodiment will now be described.
(1) When a user picks up a package from the unmanned ground vehicle 30, the unmanned ground vehicle 30 outputs an operation guidance using an output mode that is based on the specific setting or the user attribute information associated with that user. This allows the user to quickly operate the unmanned ground vehicle 30.
(2) Even in a case where the user has not registered a specific setting in the guidance output information 52, the setting unit 55 sets the output mode of the operation guidance based on the membership information 50.
(3) The setting unit 55 sets the output mode of the operation guidance based on at least one of the age, gender, and language of the user.
(4) In a household where people live together, a workplace where people work, or the like, multiple users are each likely to pick up or deposit a package at the same parking location. However, the output mode of an operation guidance that is easily understandable for each user is different. In the above configuration, when one of the users would pick up a package at one parking location, the operation guidance is performed in correspondence with that user.
(5) The setting unit 55 includes, in the guidance output information 52, the output mode designated by a user as the specific setting. This allows the unmanned ground vehicle 30 to output the operation guidance using the output mode requested by the user who picks up or deposits a package.
(6) The setting unit 55 sets the output mode of the operation guidance by setting whether to output a voice using the unmanned ground vehicle 30. Thus, when the user requests that no voice be output in a residential area or the like, the unmanned ground vehicle 30 outputs the operation guidance without using a voice.
(7) The setting unit 55 sets the output mode of the operation guidance by setting at least one of the speed, volume, and language of a voice that is output by the unmanned ground vehicle 30.

Each of the above embodiments may be modified as follows. Each of the above embodiments and the following modifications can be combined as long as the combined modifications remain technically consistent with each other.

### Setting Unit

In the above embodiment, a notification code is set for a package scheduled to be delivered. The ordering user enters an authentication code (notification code) into the user authentication unit 34 of the unmanned ground vehicle 30. Further, a different user belonging to the same group as the ordering user enters an authentication code including the notification code and an assigned code into the user authentication unit. Instead, the different user belonging to the same group as the ordering user does not have to enter the assigned code. For example, the ordering user may be notified of the notification code "1231," and user A, who corresponds to the different user belonging to the same group as the ordering user, may be notified of the notification code "1232." User B, who is another user, may be notified of the notification code "1233." In this case, the fourth digit is information used to identify each user.

In the above embodiment, the user sets the output mode of an operation guidance using the user device 20. Instead, the user may set the output mode of an operation guidance using the unmanned ground vehicle 30 only for the first time. For example, when the user performs user authentication and picks up a package from the unmanned ground vehicle 30, the server 10 or the unmanned ground vehicle 30 may determine that the guidance output information 52 corresponding to the user has no specific setting. In this case, the unmanned ground vehicle 30 shows, on the display 41, an input screen used to designate the output mode of the operation guidance. On the input screen, the user designates the language, a requested volume, a requested speed, and the like. The unmanned ground vehicle 30 regards the set of information as specific settings and sends them to the server 10 together with the user ID or group ID and the assigned code. When receiving the specific settings and the like from the unmanned ground vehicle 30, the server 10 registers them in the server 10. When the user who designated the specific settings picks up a package from the unmanned ground vehicle 30 after the registration of the specific settings, the server 10 reads the user's specific settings from the guidance output information 52 after user authentication. Then, the server 10 refers to the specific settings to cause the unmanned ground vehicle 30 to output the operation guidance.

In the above embodiment, the language, volume, and speed can be designated as the output mode of the operation guidance. Instead, at least one of them may be designated. Alternatively, the type of operation guidance may be designated as the output mode of the operation guidance. For example, a detailed operation guidance that explains how to operate in detail and a simple operation guidance that gives a brief explanation of only a procedure may be selected.

As an alternative, instead of or in addition to at least one of them, the output mode of a screen displayed on the display 41 may be designated. For example, the size of a character displayed on the screen, the difficulty of the sentences displayed on the screen, whether a screen explaining the detailed operation is displayed, and the like may be designated. When a child picks up a package, the difficulty of the sentences displayed on the screen can be lowered. For example, fewer difficult characters (e.g., Chinese characters) are used, or no difficult words are displayed on the screen.

### Code Generator

In the above embodiment, the code generator 56 generates a PIN as a notification code. Instead, as described above, the code generator 56 may generate another authentication code such as a code in which numbers and characters are combined, a code that includes only characters, a two-dimensional code, or a three-dimensional code. In the above embodiment, a user enters a notification code into the user authentication unit 34 of the unmanned ground vehicle 30. Instead, the notification code may be sent to the unmanned ground vehicle 30 from the user device 20 used by the user. In the above embodiment, the assigned code is a one-digit number. Instead, the assigned code may be a number with two or more digits, or may be a combination of numbers and characters.

### Code Sender

In the above embodiment, the code sender 57 sends a notification code to the ordering user. Instead, the code sender 57 may send notification codes to all the users of the group to which the ordering user belongs. In this case, each assigned code may be assigned to the notification code, and an authentication code including the notification code and the assigned code may be sent to the corresponding user.

### Code Acquisition Unit

In the above embodiment, the unmanned ground vehicle 30 sends the entered authentication code to the server 10, and the server 10 performs user authentication based on the authentication code. Instead, the unmanned ground vehicle 30 may perform user authentication based on the authentication code. In this case, the unmanned ground vehicle 30 stores, in the memory 36, the delivery request information 51 of an ordering user, the guidance output information 52 of an ordering user who does not belong to a group, or the guidance output information 52 of a group to which an ordering user belongs. The ordering user may enter not only the notification code but also the notification code and his or her assigned code.

### Output Controller

In the above embodiment, the output controller 59 outputs an operation guidance using a voice. Instead of or in addition to this, the output controller 59 may show a screen including the operation guidance on the display 41.

In the above embodiment, the output controller 59 determines the output mode of an operation guidance based on the user setting information after performing user authentication. In addition, the output mode of an operation guidance may be changed before the entry of the authentication code (e.g., PIN). Specifically, when the sensor unit 38 detects the approach of a person, the unmanned ground vehicle 30 determines that the operation guidance should be output at this moment. The unmanned ground vehicle 30 outputs, for example, the operation guidance "Please enter a PIN." To output the operation guidance, the server 10 or the unmanned ground vehicle 30 may refer to the guidance output information 52 associated with the ordering user to output the operation guidance with, for example, a volume included in the output mode of the guidance output information 52. Alternatively, the output mode associated with the ordering user may be replaced with the output mode associated with a preset representative user of the users belonging to the group. Here, multiple users may pick up packages at one pickup location. In this case, the output modes of the operation guidance associated with each of the users may be different or may be the same. When each user uses a different output mode, the unmanned ground vehicle 30 outputs an operation guidance that is output prior to user authentication without changing the operation guidance from the initial state. In this case, for example, a standard volume, a standard speed, and the like are used. By contrast, when the same output mode is used for the operation guidance associated with the users, an operation guidance prior to user authentication is output using that output mode. For example, when three users are scheduled to pick up packages at point A and all the output modes associated with these users are "without voice," the voice of an operation guidance prompting them to enter a PIN or the like does not have to be output. For example, when two users are scheduled to pick up packages at point A and the output modes associated with these users are "the language is English," the voice of the operation guidance may be output in English.

In the above embodiment, the output controller 59 may adjust the output mode such as the volume of the voice of an operation guidance according to ambient noise in the surroundings of the unmanned ground vehicle 30. The voice output unit 40 uses a microphone incorporated in the unmanned ground vehicle 30 to collect the ambient noise around the unmanned ground vehicle 30 and obtain parameters related to the ambient noise. The voice output unit 40 corrects the volume of the operation guidance so as to increase when the volume of the ambient noise is relatively large (e.g., when construction is underway around the pickup location). The voice output unit 40 corrects the volume of the operation guidance so as to decrease when the volume of the ambient noise is relatively small.

When there is a different unmanned ground vehicle 30 around the unmanned ground vehicle 30, the output controller 59 of the unmanned ground vehicle 30 may output an operation guidance using a voice having a pitch (frequency) different from that of the different unmanned ground vehicle 30. For example, dedicated short-range communication or near-field communication using Bluetooth^{®} or the like can be executed between these unmanned ground vehicles 30 to detect whether the different unmanned ground vehicle 30 is present. When the unmanned ground vehicle 30 determines that the different unmanned ground vehicle 30 is present around the unmanned ground vehicle 30, the unmanned ground vehicle 30 sends and receives, to and from the different unmanned ground vehicle 30, the frequency band of the voice to be used, the type of the audio file to be used, whether a voice produced by a man or woman is used, and the like via wireless communication. Then, the unmanned ground vehicle 30 makes adjustment so as not to output the operation guidance using the same voice as that of the different unmanned ground vehicle 30. Alternatively, the server 10 of the unmanned ground vehicle 30 may refer to the delivery plan of the unmanned ground vehicle 30 to determine whether packages are scheduled to deliver to the same pickup location in the same time period. In this case, the server 10 of the unmanned ground vehicle 30 may designate the frequency or the like of the voice to be output so that the unmanned ground vehicles 30, when delivering packages to the same pickup locations in the same time period, does not output the operation guidance using the same voice. Even when the type of a voice is changed in this manner, the unmanned ground vehicle 30 can change the volume and speed according to the user who picks up a package based on the user setting information.

The server 10 may store a history of picking up packages in association with a user and determine the output mode of the operation guidance based on the pickup history. In this case, the server 10 receives the information indicating the pickup history from the unmanned ground vehicle 30 after the user picks up a package. Examples of the pickup history include a state where the user forgot to pick up a package, a state where the user forgot to close the door of the unmanned ground vehicle 30, and a state where the user picked up a package without any problem. When the user forgets to pick up a package or forgets to close the door, the unmanned ground vehicle 30 may be unable to depart toward the next pickup location and thus fail to deliver packages as planned. Thus, in a case where the user did an action that provokes a warning (e.g., forgot to pick up a package or forgot to close the door) in the past, the server 10 or the unmanned ground vehicle 30 may correct the output mode of the operation guidance associated with the user. An example of the correction may include increasing the volume of the output mode of the operation guidance associated with the user and outputting a voice even if the output mode of the operation guidance associated with the user is "without voice." In a case other than the above cases, where the user did an action that provokes a warning in the past, the output mode of the operation guidance associated with the user may be corrected in accordance with the amount of time that has been used to pick up a package after the user approached unmanned ground vehicle 30. Specifically, when the amount of time to pick up a package is longer than a reference time, the server 10 or the unmanned ground vehicle 30 corrects the output mode to increase the volume of the output mode of the operation guidance associated with the user, output a voice even if the output mode of the operation guidance associated with the user is "without voice," or the like. When the amount of time to pick up a package is less than or equal to the reference time, the server 10 or the unmanned ground vehicle 30 does not correct the output mode of the operation guidance associated with the user.

### Unmanned Vehicle

The unmanned vehicle may be an unmanned aerial vehicle. The unmanned aerial vehicle is an aerial vehicle without a person onboard. In the same manner as the unmanned ground vehicle 30, the unmanned aerial vehicle includes a control device, a drive unit, a battery, and a user authentication unit. The drive unit includes a drive source that is driven by the electric power supplied from the battery, a rotary wing that is operated by the power obtained from the drive source, and the like. In addition to a program for autonomous flying, the memory of the controller stores various types of information (e.g., map information and carrying plan information). In the same manner as the unmanned ground vehicle 30, the unmanned aerial vehicle includes the user authentication unit 34, the voice output unit 40, and the display 41.

### Package Carrying Services

In each of the above embodiments, the unmanned ground vehicle 30 delivers a package. Instead of or in addition to this, the unmanned ground vehicle 30 may collect a package. When the unmanned ground vehicle 30 collects a package, the unmanned ground vehicle 30 performs user authentication. When collecting a package, the unmanned ground vehicle 30 needs to be operated. Thus, the user's specific setting and the like are used to output an operation guidance.

### Configuration of Logistics Management System

The logistics management system 1 may include a manager device in addition to the server 10, the user device 20, and the unmanned ground vehicle 30. The manager device is used by a manager who manages the logistics management system or by a manager who manages the unmanned ground vehicle 30. The manager device may be a smartphone (multi-functional telephone terminal), a tablet terminal, a personal computer, a wearable computer, or another information processing device capable of displaying images, and thus has a similar configuration to the user device 20.

In each of the above embodiments, the logistics management system 10 functions as the setting unit, the code generator, the code sender, the code acquisition unit, and the output controller. Instead, the unmanned ground vehicle 30 may execute at least one of these functions. In a case where the unmanned ground vehicle 30 executes some of the processes and the server 10 executes the remaining processes, the unmanned ground vehicle 30 and the server 10 send and receive the results of the processes to and from each other if the results need to be shared.

### REFERENCE SIGNS LIST

1) Logistics Management System, 10) Server; 20) User Device; 30) Unmanned Ground Vehicle

## Claims

1. A logistics management system (1), comprising:
a setting unit (55) configured to set, based on user setting information associated with users, an output mode of an operation guidance that is output by an unmanned vehicle (30) that carries a package, wherein:
the operation guidance comprises a voice that explains to a user how to take a package out of a box mounted in the unmanned vehicle (30) and enable the unmanned vehicle (30) to depart to a next destination, and the setting unit is configured to set the output mode of the operation guidance by setting at least one of a speed, a volume, and language of the voice; and/or
the operation guidance comprises an image explaining to the user how to operate the unmanned vehicle (30) to pick up a package from the unmanned vehicle (30);
a code generator (56) configured to generate a notification code for a package subject to carrying and associates the generated notification code with a user who picks up or deposits the package;
a code sender (57) configured to send the generated notification code to a user device (20) used by the user;
a code acquisition unit (58) configured to obtain an authentication code which includes the notification code and which the user has entered into the unmanned vehicle (30); and
an output controller (59) configured to specify, based on the notification code included in the obtained authentication code, the output mode of the operation guidance corresponding to the user who has entered the authentication code and cause the unmanned vehicle (30) to output the operation guidance using the specified output mode.

2. The logistics management system (1) according to claim 1, wherein the setting unit (55) is configured to obtain membership information (50) associated with the package that is scheduled to be carried and set the output mode of the operation guidance using, as the user setting information, the obtained membership information (50).

3. The logistics management system (1) according to claim 2, wherein the setting unit (55) is configured to set the output mode of the operation guidance based on at least one of age, gender, and language of a user included in the membership information (50).

4. The logistics management system (1) according to any one of claims 1 to 3, wherein
the user setting information includes identification information of a group corresponding to a group to which users belong and an assigned code used to identify each of the users belonging to the group,
the group is associated with a parking location for the unmanned vehicle (30) at which each of the users belonging to the group picks up or deposits a package,
the code generator (56) is configured to generate a notification code for the group,
the code acquisition unit (58) is configured to obtain an authentication code including the notification code and the assigned code, and
the output controller (59) is configured to identify the group based on the notification code included in the obtained authentication code, specify one user from the users belonging to the group based on the assigned code, and specify the output mode of the operation guidance associated with the user specified based on the user setting information.

5. The logistics management system (1) according to any one of claims 1 to 4, wherein the setting unit (55) is configured to receive, from the user device (20), the output mode of the operation guidance designated by the user and include, in the user setting information, the received output mode of the operation guidance.

6. The logistics management system (1) according to any one of claims 1 to 5, wherein the setting unit (55) is configured to set the output mode of the operation guidance by setting whether to output the voice using the unmanned vehicle (30).

7. The logistics management system (1) according to any one of claims 1 to 6, wherein
the output controller (59) is configured to specify, when users who each pick up or deposit a different package are associated with a parking location for the unmanned vehicle (30), output modes of the operation guidance that are associated with the users, and
the output controller (59) is configured to output, when the specified output modes are identical, an operation guidance prior to user authentication of the users based on the specified output modes.

8. The logistics management system (1) according to any one of claims 1 to 7, wherein the output controller (59) is configured to obtain environment information related to surroundings of a parking location for the unmanned vehicle (30) and correct the specified output mode based on the environment information.

9. The logistics management system (1) according to any one of claims 1 to 8, wherein
the output controller (59) is configured to store, in a memory (12), an operation history in which the user picked up or deposited the package by operating the unmanned vehicle (30), and
the output controller (59) is configured to obtain the operation history when specifying the output mode of the operation guidance corresponding to the user, and correct the specified output mode based on the operation history.

10. A logistics management method for executing:
a step of setting, by one or more controllers (11), based on user setting information associated with users, an output mode of an operation guidance that is output by an unmanned vehicle (30) that carries a package, wherein:
the operation guidance comprises a voice that explains to a user how to take a package out of a box mounted in the unmanned vehicle (30) and enable the unmanned vehicle (30) to depart to a next destination, and setting the output mode of the operation guidance comprises setting at least one of a speed, a volume, and language of the voice; and/or
the operation guidance comprises an image explaining to the user how to operate the unmanned vehicle (30) to pick up a package from the unmanned vehicle (30);
a step of, by the one or more controllers (11), generating a notification code for a package subject to carrying and associating the generated notification code with a user who picks up or deposits the package;
a step of sending, by the one or more controllers (11), the generated notification code to a user device (20) used by the user;
a step of obtaining, by the one or more controllers (11), an authentication code which includes the notification code and which the user has entered into the unmanned vehicle (30); and
a step of, by the one or more controllers (11), specifying, based on the notification code corresponding to the obtained authentication code, the output mode of the operation guidance corresponding to the user who has entered the authentication code and causing the unmanned vehicle (30) to output the operation guidance using the specified output mode.

11. A program that causes one or more controllers (11) to execute:
a step of setting, based on user setting information associated with users, an output mode of an operation guidance that is output by an unmanned vehicle (30) that carries a package, wherein:
the operation guidance comprises a voice that explains to a user how to take a package out of a box mounted in the unmanned vehicle (30) and enable the unmanned vehicle (30) to depart to the next destination, and setting the output mode of the operation guidance comprises setting at least one of a speed, a volume, and language of the voice; and/or
the operation guidance comprises an image explaining to the user how to operate the unmanned vehicle (30) to pick up a package from the unmanned vehicle (30);
a step of generating a notification code for a package subject to carrying and associating the generated notification code with a user who picks up or deposits the package;
a step of sending the generated notification code to a user device (20) used by the user;
a step of obtaining an authentication code which includes the notification code and which the user has entered into the unmanned vehicle (30); and
a step of specifying, based on the notification code corresponding to the obtained authentication code, the output mode of the operation guidance corresponding to the user who has entered the authentication code and causing the unmanned vehicle (30) to output the operation guidance using the specified output mode.

## Patentansprüche

1. Logistikverwaltungssystem (1), umfassend:
eine Einstellungseinheit (55), die konfiguriert ist, um, basierend auf Benutzereinstellungsinformationen, die mit Benutzern verknüpft sind, einen Ausgabemodus einer Betriebsanleitung einzustellen, die durch ein unbemanntes Fahrzeug (30) ausgegeben wird, das ein Paket transportiert, wobei:
die Betriebsanleitung eine Stimme umfasst, die einem Benutzer erklärt, wie er ein Paket aus einer Box, die in dem unbemannten Fahrzeug (30) montiert ist, nimmt und das unbemannte Fahrzeug (30) aktiviert, um zu einem nächsten Ziel abzufahren, und die Einstellungseinheit konfiguriert ist, um den Ausgabemodus der Betriebsanleitung durch Einstellen von mindestens einer von einer Geschwindigkeit, einer Lautstärke und einer Sprache der Stimme einzustellen; und/oder
die Betriebsanleitung ein Bild umfasst, das dem Benutzer erklärt, wie das unbemannte Fahrzeug (30) zu bedienen ist, um ein Paket von dem unbemannten Fahrzeug (30) abzuholen;
einen Codegenerator (56), der konfiguriert ist, um einen Benachrichtigungscode für ein Paket, das einem Transport unterliegt, zu erzeugen und der den erzeugten Benachrichtigungscode mit einem Benutzer verknüpft, der das Paket abholt oder abgibt;
einen Codesender (57), der konfiguriert ist, um den erzeugten Benachrichtigungscode an eine Benutzervorrichtung (20), die durch den Benutzer benutzt wird, zu senden;
eine Codeerfassungseinheit (58), die konfiguriert ist, um einen Authentifizierungscode zu erhalten, der den Benachrichtigungscode einschließt, und den der Benutzer in das unbemannte Fahrzeug (30) eingegeben hat; und
eine Ausgabesteuerung (59), die konfiguriert ist, um, basierend auf dem Benachrichtigungscode, der in dem Authentifizierungscode eingeschlossen ist, den Ausgabemodus der Betriebsanleitung, die dem Benutzer entspricht, der den Authentifizierungscode eingegeben hat, zu spezifizieren und zu veranlassen, dass das unbemannte Fahrzeug (30) die Betriebsanleitung unter Verwendung des spezifizierten Ausgabemodus ausgibt.

2. Logistikverwaltungssystem (1) nach Anspruch 1, wobei die Einstellungseinheit (55) konfiguriert ist, um Mitgliedschaftsinformationen (50) zu erhalten, die mit dem Paket verknüpft sind, dessen Transport geplant ist, und den Ausgabemodus der Betriebsanleitung unter Verwendung, als die Benutzereinstellungsinformationen, der erhaltenen Mitgliedschaftsinformationen (50) einzustellen.

3. Logistikverwaltungssystem (1) nach Anspruch 2, wobei die Einstellungseinheit (55) konfiguriert ist, um den Ausgabemodus der Betriebsanleitung, basierend auf mindestens einem von Alter, Geschlecht und Sprache eines Benutzers, die in dem Mitgliedschaftsinformationen (50) eingeschlossen sind, einzustellen.

4. Logistikverwaltungssystem (1) nach einem der Ansprüche 1 bis 3, wobei
die Benutzereinstellungsinformationen Identifikationsinformationen einer Gruppe, die einer Gruppe entspricht, zu der Benutzer gehören, und einen zugewiesenen Code, der verwendet wird, um jeden der Benutzer, die zu der Gruppe gehören, zu identifizieren,
die Gruppe mit einem Parkplatz für das unbemannte Fahrzeug (30) verknüpft ist, an dem jeder der Benutzer, die zu der Gruppe gehören, ein Paket abholt oder abgibt, wobei der Codegenerator (56) konfiguriert ist, um einen Benachrichtigungscode für die Gruppe zu erzeugen,
die Codeerfassungseinheit (58) konfiguriert ist, um einen Authentifizierungscode zu erhalten, einschließlich des Benachrichtigungscodes und des zugewiesenen Codes, und
die Ausgabesteuerung (59) konfiguriert ist, um die Gruppe, basierend auf dem Benachrichtigungscode, der in dem erhaltenen Authentifizierungscode eingeschlossen ist, zu identifizieren, einen Benutzer, aus den Benutzern, die zu der Gruppe gehören, basierend auf dem zugewiesenen Code zu spezifizieren, und den Ausgabemodus der Betriebsanleitung, die mit dem Benutzer verknüpft ist, der basierend auf den Benutzereinstellungsinformationen spezifiziert ist, zu spezifizieren.

5. Logistikverwaltungssystem (1) nach einem der Ansprüche 1 bis 4, wobei die Einstellungseinheit (55) konfiguriert ist, um, von der Benutzervorrichtung (20), den Ausgabemodus der Betriebsanleitung, der durch den Benutzer festgelegt wird, zu empfangen, und, in den Benutzereinstellungsinformationen, den empfangenen Ausgabemodus der Betriebsanleitung einzuschließen.

6. Logistikverwaltungssystem (1) nach einem der Ansprüche 1 bis 5, wobei die Einstellungseinheit (55) konfiguriert ist, um den Ausgabemodus der Betriebsanleitung einzustellen, durch Einstellen, ob die Sprache unter Verwendung des unbemannten Fahrzeugs (30) auszugeben ist.

7. Logistikverwaltungssystem (1) nach einem der Ansprüche 1 bis 6, wobei
die Ausgabesteuerung (59) konfiguriert ist, um, wenn Benutzer, die jeweils ein unterschiedliches Paket abholen oder abgeben, mit einem Parkplatz für das unbemannte Fahrzeug (30) verknüpft sind, Ausgabemodi der Betriebsanleitung, die mit den Benutzern verknüpft sind, zu spezifizieren, und
die Ausgabesteuerung (59) konfiguriert ist, um, wenn die spezifizierten Ausgabemodi identisch sind, eine Betriebsanleitung vor der Benutzerauthentifizierung des Benutzers, basierend auf den spezifizierten Ausgabmodi, auszugeben.

8. Logistikverwaltungssystem (1) nach einem der Ansprüche 1 bis 7, wobei die Ausgabesteuerung (59) konfiguriert ist, um Umgebungsinformationen zu erhalten, die sich auf ein Umfeld eines Parkplatzes für das unbemannte Fahrzeug (30) beziehen, und den spezifizierten Ausgabemodus, basierend auf den Umgebungsinformationen, zu korrigieren.

9. Logistikverwaltungssystem (1) nach einem der Ansprüche 1 bis 8, wobei
die Ausgabesteuerung (59) konfiguriert ist, um in einem Speicher (12) eine Betriebshistorie zu speichern, in der der Benutzer das Paket durch Bedienen des unbemannten Fahrzeugs (30) abgeholt oder abgelegt hat, und
die Ausgabesteuerung (59) konfiguriert ist, um die Betriebshistorie zu erhalten, wenn der Ausgabemodus der Betriebsanleitung, die dem Benutzer entspricht, spezifiziert wird, und den spezifizierten Ausgabemodus, basierend auf der Betriebshistorie, zu korrigieren.

10. Logistikverwaltungsverfahren zum Ausführen:
eines Schritts des Einstellens, durch eine oder mehrere Steuerungen (11), basierend auf Benutzereinstellungsinformationen, die mit Benutzern verknüpft sind, eines Ausgabemodus einer Betriebsanleitung, die durch ein unbemanntes Fahrzeug (30) ausgegeben wird, das ein Paket transportiert, wobei:
die Betriebsanleitung eine Stimme umfasst, die einem Benutzer erklärt, wie ein Paket aus einer Box, die in dem unbemannten Fahrzeug (30) montiert ist, herauszunehmen und das unbemannte Fahrzeug (30) zu aktivieren ist, um zu einem nächsten Ziel abzufahren, und wobei das Einstellen des Ausgabemodus der Betriebsanleitung das Einstellen von mindestens einer von einer Geschwindigkeit, einer Lautstärke und einer Sprache der Stimme umfasst; und/oder
die Betriebsanleitung ein Bild umfasst, das dem Benutzer erklärt, wie das unbemannte Fahrzeug (30) zu bedienen ist, um ein Paket von dem unbemannten Fahrzeug (30) abzuholen;
einen Schritt, durch die eine oder die mehreren Steuerungen (11), des Erzeugens eines Benachrichtigungscodes für ein Paket, das einem Transport unterliegt, und wobei der erzeugte Benachrichtigungscode mit einem Benutzer verknüpft wird, der das Paket abholt oder abgibt;
einen Schritt des Sendens, durch die eine oder die mehreren Steuerungen (11), des erzeugten Benachrichtigungscodes an eine Benutzervorrichtung (20), die durch den Benutzer verwendet wird;
einen Schritt des Erhaltens, durch die eine oder die mehreren Steuerungen (11), eines Authentifizierungscodes, der den Benachrichtigungscode einschließt und den der Benutzer in das unbemannte Fahrzeug (30) eingegeben hat; und
einen Schritt, durch die eine oder die mehreren Steuerungen (11), des Spezifizierens, basierend auf dem Benachrichtigungscode, der dem erhaltenen Authentifizierungscode entspricht, des Ausgabemodus der Betriebsanleitung, die dem Benutzer entspricht, der den Authentifizierungscode eingegeben hat, und des Veranlassens, dass das unbemannte Fahrzeug (30) die Betriebsanleitung unter Verwendung des spezifizierten Ausgabemodus, ausgibt.

11. Programm, das veranlasst, dass eine oder mehrere Steuerungen (11) ausführen:
einen Schritt des Einstellens, basierend auf Benutzereinstellungsinformationen, die mit Benutzern verknüpft sind, eines Ausgabemodus einer Betriebsanleitung, die durch ein unbemanntes Fahrzeug (30) ausgegeben wird, das ein Paket transportiert, wobei:
die Betriebsanleitung eine Stimme umfasst, die einem Benutzer erklärt, wie ein Paket aus einer Box, die in dem unbemannten Fahrzeug (30) montiert ist, herauszunehmen und das unbemannte Fahrzeug (30) zu aktivieren ist, um zu dem nächsten Ziel abzufahren, und wobei das Einstellen des Ausgabemodus der Betriebsanleitung das Einstellen von mindestens einer von einer Geschwindigkeit, einer Lautstärke und einer Sprache der Stimme umfasst; und/oder
die Betriebsanleitung ein Bild umfasst, das dem Benutzer erklärt, wie das unbemannte Fahrzeug (30) zu bedienen ist, um ein Paket von dem unbemannten Fahrzeug (30) abzuholen;
einen Schritt des Erzeugens eines Benachrichtigungscodes für ein Paket, das einem Transport unterliegt, und wobei der erzeugte Benachrichtigungscode mit einem Benutzer verknüpft wird, der das Paket abholt oder abgibt;
einen Schritt des Sendens des erzeugten Benachrichtigungscodes an eine Benutzervorrichtung (20), die durch den Benutzer verwendet wird;
einen Schritt des Erhaltens eines Authentifizierungscodes, der den Benachrichtigungscode einschließt und den der Benutzer in das unbemannte Fahrzeug (30) eingegeben hat; und
einen Schritt des Spezifizierens, basierend auf dem Benachrichtigungscode, der dem erhaltenen Authentifizierungscode entspricht, des Ausgabemodus der Betriebsanleitung, die dem Benutzer entspricht, der den Authentifizierungscode eingegeben hat, und des Veranlassens, dass das unbemannte Fahrzeug (30) die Betriebsanleitung unter Verwendung des spezifizierten Ausgabemodus, ausgibt.

## Revendications

1. Système de gestion logistique (1) comprenant :
une unité de réglage (55) configurée pour régler, sur la base d'informations de réglage utilisateur associées à des utilisateurs, un mode de sortie d'une directive opérationnelle qui est émise par un véhicule sans conducteur (30) qui transporte un paquet, dans lequel :
la directive opérationnelle comprend une voix qui explique à un utilisateur comment sortir un paquet d'une boîte montée dans le véhicule sans conducteur (30) et permettre au véhicule sans conducteur (30) de partir vers une prochaine destination, et l'unité de réglage est configurée pour régler le mode de sortie de la directive opérationnelle en réglant au moins l'un parmi une vitesse, un volume et une langue de la voix ; et/ou
la directive opérationnelle comprend une image expliquant à l'utilisateur comment faire fonctionner le véhicule sans conducteur (30) pour collecter un paquet dans le véhicule sans conducteur (30) ;
un générateur de code (56) configuré pour générer un code de notification pour un paquet à transporter et associer le code de notification généré à un utilisateur qui collecte ou dépose le paquet ;
un dispositif d'envoi de code (57) configuré pour envoyer le code de notification généré à un dispositif utilisateur (20) utilisé par l'utilisateur ;
une unité d'acquisition de code (58) configurée pour obtenir un code d'authentification qui comporte le code de notification et que l'utilisateur a saisi dans le véhicule sans conducteur (30) ; et
un dispositif de commande de sortie (59) configuré pour spécifier, sur la base du code de notification inclus dans le code d'authentification obtenu, le mode de sortie de la directive opérationnelle correspondant à l'utilisateur qui a saisi le code d'authentification et pour amener le véhicule sans conducteur (30) à émettre la directive opérationnelle à l'aide du mode de sortie spécifié.

2. Système de gestion logistique (1) selon la revendication 1, dans lequel l'unité de réglage (55) est configurée pour obtenir des informations d'abonnement (50) associées au paquet qu'il est prévu de transporter et pour régler le mode de sortie de la directive opérationnelle à l'aide, en tant qu'informations de réglage utilisateur, des informations d'abonnement obtenues (50).

3. Système de gestion logistique (1) selon la revendication 2, dans lequel l'unité de réglage (55) est configurée pour régler le mode de sortie de la directive opérationnelle sur la base d'au moins l'un parmi l'âge, le genre et la langue d'un utilisateur inclus dans les informations d'abonnement (50).

4. Système de gestion logistique (1) selon l'une quelconque des revendications 1 à 3, dans lequel
les informations de réglage utilisateur comportent des informations d'identification d'un groupe correspondant à un groupe auquel les utilisateurs appartiennent et un code attribué utilisé pour identifier chacun des utilisateurs appartenant au groupe,
le groupe est associé à un emplacement de stationnement du véhicule sans conducteur (30) au niveau duquel chacun des utilisateurs appartenant au groupe collecte ou dépose un paquet, le générateur de code (56) est configuré pour générer un code de notification pour le groupe,
l'unité d'acquisition de code (58) est configurée pour obtenir un code d'authentification comportant le code de notification et le code attribué, et
le dispositif de commande de sortie (59) est configuré pour identifier le groupe sur la base du code de notification inclus dans le code d'authentification obtenu, spécifier un utilisateur parmi les utilisateurs appartenant au groupe sur la base du code attribué, et spécifier le mode de sortie de la directive opérationnelle associée à l'utilisateur spécifié sur la base des informations de réglage utilisateur.

5. Système de gestion logistique (1) selon l'une quelconque des revendications 1 à 4, dans lequel l'unité de réglage (55) est configurée pour recevoir, en provenance du dispositif utilisateur (20), le mode de sortie de la directive opérationnelle désigné par l'utilisateur et comporter, dans les informations de réglage utilisateur, le mode de sortie reçu de la directive opérationnelle.

6. Système de gestion logistique (1) selon l'une quelconque des revendications 1 à 5, dans lequel l'unité de réglage (55) est configurée pour régler le mode de sortie de la directive opérationnelle en réglant le fait de savoir si la voix doit être émise à l'aide du véhicule sans conducteur (30).

7. Système de gestion logistique (1) selon l'une quelconque des revendications 1 à 6, dans lequel
le dispositif de commande de sortie (59) est configuré pour spécifier, lorsque des utilisateurs qui collectent ou déposent chacun un paquet différent sont associés à un emplacement de stationnement du véhicule sans conducteur (30), des modes de sortie de la directive opérationnelle qui sont associés aux utilisateurs, et
le dispositif de commande de sortie (59) est configuré pour émettre, lorsque les modes de sortie spécifiés sont identiques, une directive opérationnelle avant une authentification utilisateur des utilisateurs sur la base des modes de sortie spécifiés.

8. Système de gestion logistique (1) selon l'une quelconque des revendications 1 à 7, dans lequel le dispositif de commande de sortie (59) est configuré pour obtenir des informations d'environnement d'un emplacement de stationnement du véhicule sans conducteur (30) et corriger le mode de sortie spécifié sur la base des informations d'environnement.

9. Système de gestion logistique (1) selon l'une quelconque des revendications 1 à 8, dans lequel
le dispositif de commande de sortie (59) est configuré pour stocker, dans une mémoire (12), un historique des opérations au cours desquelles l'utilisateur a collecté ou déposé le paquet en faisant fonctionner le véhicule sans conducteur (30), et
le dispositif de commande de sortie (59) est configuré pour obtenir l'historique des opérations lors de la spécification du mode de sortie de la directive opérationnelle correspondant à l'utilisateur, et pour corriger le mode de sortie spécifié sur la base de l'historique des opérations.

10. Procédé de gestion logistique permettant l'exécution :
d'une étape consistant à régler, par un ou plusieurs dispositifs de commande (11), sur la base d'informations de réglage utilisateur associées à des utilisateurs, un mode de sortie d'une directive opérationnelle qui est émise par un véhicule sans conducteur (30) qui transporte un paquet, dans lequel :
la directive opérationnelle comprend une voix qui explique à l'utilisateur comment sortir un paquet d'une boîte montée dans le véhicule sans conducteur (30) et permettre au véhicule sans conducteur (30) de partir vers une prochaine destination, et le réglage du mode de sortie de la directive opérationnelle comprend le réglage d'au moins l'un parmi une vitesse, un volume et une langue de la voix ; et/ou
la directive opérationnelle comprend une image expliquant à l'utilisateur comment faire fonctionner le véhicule sans conducteur (30) pour collecter un paquet dans le véhicule sans conducteur (30) ;
d'une étape consistant à, par le ou les dispositifs de commande (11), générer un code de notification pour un paquet à transporter et à associer le code de notification généré à un utilisateur qui collecte ou dépose le paquet ;
d'une étape consistant à envoyer, par le ou les dispositifs de commande (11), le code de notification généré à un dispositif utilisateur (20) utilisé par l'utilisateur ;
d'une étape consistant à obtenir, par le ou les dispositifs de commande (11), un code d'authentification qui comporte le code de notification et que l'utilisateur a saisi dans le véhicule sans conducteur (30) ; et
d'une étape consistant à, par le ou les dispositifs de commande (11), spécifier, sur la base du code de notification correspondant au code d'authentification obtenu, le mode de sortie de la directive opérationnelle correspondant à l'utilisateur qui a saisi le code d'authentification et à amener le véhicule sans conducteur (30) à émettre la directive opérationnelle à l'aide du mode de sortie spécifié.

11. Programme qui amène le ou les dispositifs de commande (11) à exécuter :
une étape consistant à régler, sur la base d'informations de réglage utilisateur associées à des utilisateurs, un mode de sortie d'une directive opérationnelle émise par un véhicule sans conducteur (30) qui transporte un paquet, dans lequel :
la directive opérationnelle comprend une voix qui explique à l'utilisateur comment sortir un paquet d'une boîte montée dans le véhicule sans conducteur (30) et permettre au véhicule sans conducteur (30) de partir vers la prochaine destination, et le réglage du mode de sortie de la directive opérationnelle comprend le réglage d'au moins l'un parmi une vitesse, un volume et une langue de la voix ; et/ou
la directive opérationnelle comprend une image expliquant à l'utilisateur comment faire fonctionner le véhicule sans conducteur (30) pour collecter un paquet dans le véhicule sans conducteur (30) ;
une étape consistant à générer un code de notification pour un paquet à transporter et à associer le code de notification généré à un utilisateur qui collecte ou dépose le paquet ;
une étape consistant à envoyer le code de notification généré à un dispositif utilisateur (20) utilisé par l'utilisateur ;
une étape consistant à obtenir un code d'authentification qui comporte le code de notification et que l'utilisateur a saisi dans le véhicule sans conducteur (30) ; et
une étape consistant à spécifier, sur la base du code de notification correspondant au code d'authentification obtenu, le mode de sortie de la directive opérationnelle correspondant à l'utilisateur qui a saisi le code d'authentification et à amener le véhicule sans conducteur (30) à émettre la directive opérationnelle à l'aide du mode de sortie spécifié.
